# EUROPEAN PATENT SPECIFICATION

(11) **EP 1 844 833 B1**
(45) Date of publication and mention of the grant of the patent: **23.01.2013**
(21) Application number: 05817198.4
(22) Date of filing: 18.11.2005
(51) Int. Cl.: B01D 29/68, A01G 25/16

(54) **SELF-CLEANING FILTER FOR AGRICULTURAL IRRIGATION WATER**
SELBSTREINIGENDES FILTER FÜR BEWÄSSERUNGSWASSER FÜR DIE LANDWIRTSCHAFT
FILTRE AUTONETTOYANT POUR EAUX D'IRRIGATION ISSUES DE L'AGRICULTURE

(30) Priority: 04.01.2005 ES 200500010 U
(43) Date of publication of application: 17.10.2007
(73) Proprietor: Ros Roca, Salvador, 30709 Roldan (ES)
(72) Inventor: Ros Roca, Salvador, 30709 Roldan (ES)
(74) Representative: Munoz Garcia, Antonio
(86) International application number: PCT/ES2005/000630
(87) International publication number: WO 2006/072642

(56) References cited:
- EP-A- 0 262 398
- DE-A1- 2 545 684
- DE-A1- 10 012 186
- ES-U- 1 040 967
- ES-U- 1 042 128
- ES-U- 1 050 877
- US-A- 4 123 356
- US-A- 4 552 655
- US-A- 4 707 259
- US-A1- 2004 000 515

## Description

### Object of the Invention

The present specification relates to an improved self-cleaning filter for agricultural irrigation water, in which a series of improvements introduced in the self-cleaning filter intended for water cleaning is verified, in which filters the self-cleaning process is carried out by means of the temporary reversal of the direction of the water flow traversing it, achieving the reduction of water consumption from the cleanings, the periodic maintenance operations, manual cleanings and the high manufacturing costs.

### Field of the Invention

This invention is applicable in the industry dedicated to the manufacture of filters for water, especially for irrigation water.

### Background of the Invention

As regards self-cleaning filters, the state of the art has recently undergone a fast evolution, mainly due to the development of their use in irrigation applications.

The entire professional sector is aware of the scope reached for the purpose of achieving a better use of hydraulic resources, especially in regions having a natural water shortage, and in this sense, trickle irrigation and microsprinkler irrigation can be mentioned as examples of the referred techniques.

All these modern techniques achieve a high degree of water exploitation and on the other hand, it is also obvious that the exploitation of water of worse quality is increasing, which operation frequently involves the use of water with impurities, which can give rise to a serious problem in trickle and microsprinkler irrigation installations although they are not at all a drawback with traditional irrigation techniques.

In view of the foregoing, it is currently necessary to place filters preventing the arrival of impurities swept by the water flow to the mentioned trickle and microsprinkler irrigation installations as much as possible.

The problem arising as a result of the use of filters is that derived from the necessary cleaning and maintenance operations associated to its action for eliminating the impurities accumulated therein.

In relation to the above, it must be indicated that self-cleaning filters have long been known in which, starting from a considerably cylindrical casing, two coaxial chambers, a perimetric chamber and an axial chamber, are arranged therein, which chambers are connected to one another through a plurality of filtering discs provided with grooves in their sides, which grooves are occasionally radial and occasionally oblique, such that upon superimposing these discs over one another, the mentioned grooves become conduits with a reduced caliber conferring the filtering effect to these filters.

In this type of filters, the generally radial, corresponding water inlet is coupled to the outer or enveloping chamber, whereas the axial chamber is in turn connected to the outlet duct for the filtered water, generally in an axial arrangement, such that the suitably pressurized water first reaches the perimetric chamber, so that it reaches the axial chamber through the discs, its filtration occurring, and finally laves the filter through the axial outlet thereof.

The mentioned filtering conduits will obviously be flooded with dirt and over time, therefore it is necessary to carry out periodic washings or cleanings thereof, for which purpose the operation of reversing the direction of water circulation is also known, such that the clean water penetrates through the inlet which was the outlet duct, passes between the discs and sweeps away the dirt deposited therein towards what was normally the inlet opening.

The fact that, in order to facilitate this operation, the discs are separated during the self-washing operation so as to facilitate releasing and carrying away the dirt located on their surface is also known.

Since the operations and processes making the water flow traversing it reverse for the cleaning are known, the passage of water is closed, only allowing it to pas through perforated tubes impinging on the rings and making them rotate due to the orientation of the orifices, the ejection of the particles facilitating this operation.

The flow reversal by means of a three-way valve coupled in the water inlet to the filter is also known.

This feature achieves the wide use of these filters, essentially in the countries in which the cost of manual labor is high, those installations having self-cleaning filters therefore being preferred.

However, this structure entails wide and varied drawbacks, mainly centered on the following aspects. Namely:
- During the cleaning or self-washing phase, the passage of water is closed, only allowing it to pass through the perforated tubes, the filter being forced to clean the rings by means of jets under pressure, this causing a very low particle sweeping speed, making the exit of all these particles difficult.
- In water with a high degree of particles in suspension, the necessary number of cleanings is very high, due to that mentioned previously due to the particles in suspension not being completely cleaned, causing the spending of water to be greater than necessary.
- When the water particles are of not very heavy or floating matter, such as for example, seaweed remains, they make the cleanings more precarious due to that mentioned previously, since the cleaning flow speed is not available, and as a result of the flow rate in the entire cleaning phase, which forces to waste more water to shorten the cleaning operations.
- Due to the complexity of the mechanisms used in these self-cleaning filters, they require a high maintenance control for their operation and therefore a periodically added cost.
- The structure of the components of these filters and the multiple parts, joints and different accessories make the manufacture very expensive and therefore they are less used by the users.

The evident solution to the drawbacks currently existing in this issue would be to have a self-cleaning filter for agricultural irrigation water in which the self-cleaning water is carried out by means of the temporary reversal of the direction of the water flow traversing it, reducing the water consumption in these maintenance operations.

However, the applicant is not aware of the current existence of an invention having the features described in this specification.

With respect to the current state of the art, the following documents must be pointed out as the most relevant: ES1040967U, - ES1050877U, - US4552655A, - US4123356A, - ES1042128U, however, none of them, neither when considered by themselves or in combination with one another, describes the present invention as it is claimed, because although it also relates to filters that are cleaned automatically when reversing the direction of the flow and such filters have a cylindrical casing with two coaxial chambers, with an inlet conduit for water to be treated and an outlet for self-cleaning and a disc frame which, when pressed in the axial direction, are responsible for filtering the fluid, none of them includes an assembly which moves integrally through the cartridge forming the rings and traverses said rings separating the dirty water area located above it from the clean water area located below it. Furthermore, none of them has a clean water outlet that is also the clean water inlet in self-cleaning, nor does any of them have an additional water outlet.

### Description of the Invention

The improved self-cleaning filter for agricultural irrigation water solves the aforementioned drawbacks in a completely satisfactory manner.

The improved self-cleaning filter for agricultural irrigation water object of the invention is specifically formed by a basic structure, similar to other filters of this type, formed by an outer chamber to which the water inlet is coupled, in the inside of which an axial chamber communicating with the outlet conduit or mouth is located, both chambers being defined by a rack of discs, and the inner chamber being formed at the inside of filtering discs or rings.

One of the features of the present invention consists of incorporating an outlet for the water coming from the cleaning in the outer chamber, independently of that used as inlet to the filter, this outlet making it possible to carry our a precleaning of the rings at a greater circulating flow speed for its cleaning, eliminating all the particles in suspension, by first opening the newly incorporated outlet it is achieved that the water entering the filter sweeps the larger particles adhered to the rings in the outer part thereof, and in a reduced time period, the water inlet to the filter is closed, this causing the flow to reverse, cleaning the water coming from the perforated tubes.

This filter is substantially different from the currently used filters in the fact that it has the possibility of carrying out a self-closing upon reversing the flow, achieving that the water passes only through the perforated tubes and the rings are separated at the same time, these two effects depending on one another in accordance with a base on which the rings are supported, forming the packet which is internally traversed by four tubes forming the frame of the rings which are supported in these tubes and the latter are finished at their upper part in a circular part acting as an upper plug of the rings, which plug has an outer diameter measurement similar to that of the rings to which the four tubes are removably secured.

At the other lower part of the tubes, these pass through the base by means of holes greater than the diameter of the tubes, for the purpose of achieving a free movement and these tubes finishing in a circular part leaving the orifices formed by the tubes free and being fixed thereto, they allow carrying out the effect of closing the passage of water upon reversing the flow and separating the rings at the same time.

The entire invention by default presses the rings by means of a spring located at the lower part or base of the rings, configuring the self-closing means.

To sum up, this filter lacks joints or membranes or any other means causing a periodic maintenance and a low manufacturing cost due to its minimal use of construction parts.

### Description of the Drawings

To complement the description which is being made and for the purpose of aiding to better understand the features of the invention, a set of drawings is attached to this specification as an integral part thereof, in which the following has been shown with an illustrative and non-limiting character:

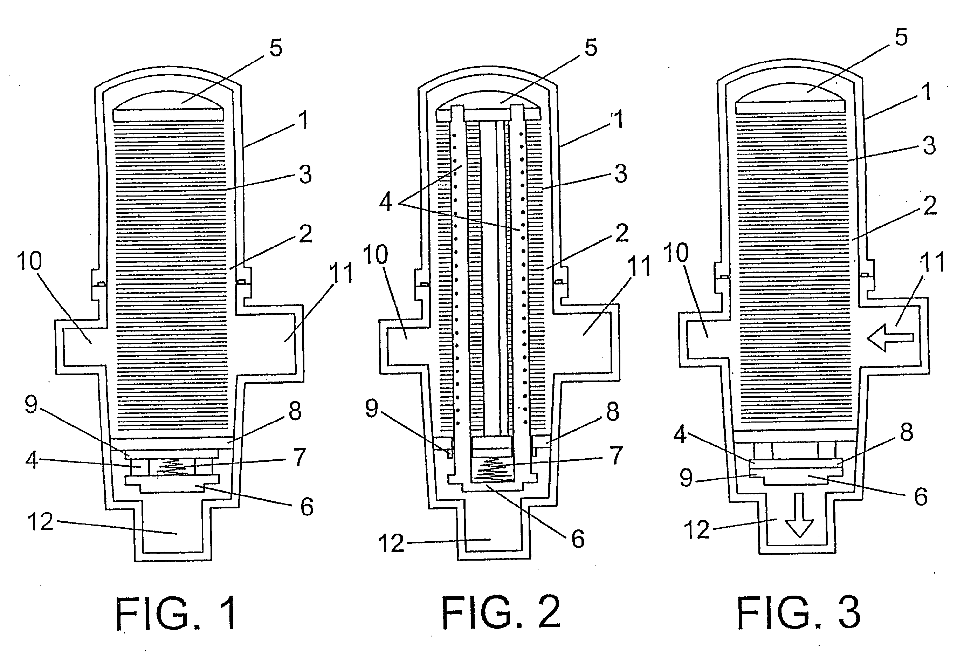

Figure 1 shows a partially sectioned side elevational view of the object of the invention corresponding to an improved self-cleaning filter for agricultural irrigation water in a rest position.
Figure 2 shows a completely sectioned view in an identical position of the object shown in Figure 1.
Figure 3 shows a view of the object shown in Figure 1 in a filtering position.
Figure 4 shows a completely sectioned view of the object in an identical position to that shown in Figure 3.
Figure 5 shows a view of the object shown in Figure 1 in a cleaning position.
Figure 6 shows a sectioned view in an identical position of the object shown in Figure 5.

### Preferred Embodiment of the Invention

In view of these figures, it can be observed how the improved self-cleaning filter for agricultural irrigation water is formed from a cylindrical casing (1) having an inner hollow area (2), to which a mouth (11) of water to be treated is radially coupled, and a second mouth (12) axially coupled for the filtered water outlet, a cover which is duly secured by a metal clamp or the like being incorporated to the casing (1).

Inside the casing (1), there is a cartridge (3) formed by an assembly of grooved rings that are duly pressed in an axial manner, and said cartridge (3) defines two chambers inside the casing (1), an outer dirty water chamber (2) and an inner filtered water chamber.

In the filtering state or situation, the water accesses through inlet (11), passing through the duly pressed rings (3), there remaining particles in the latter, and the clean water passing to the inner chamber, accessing through the axial outlet (12).

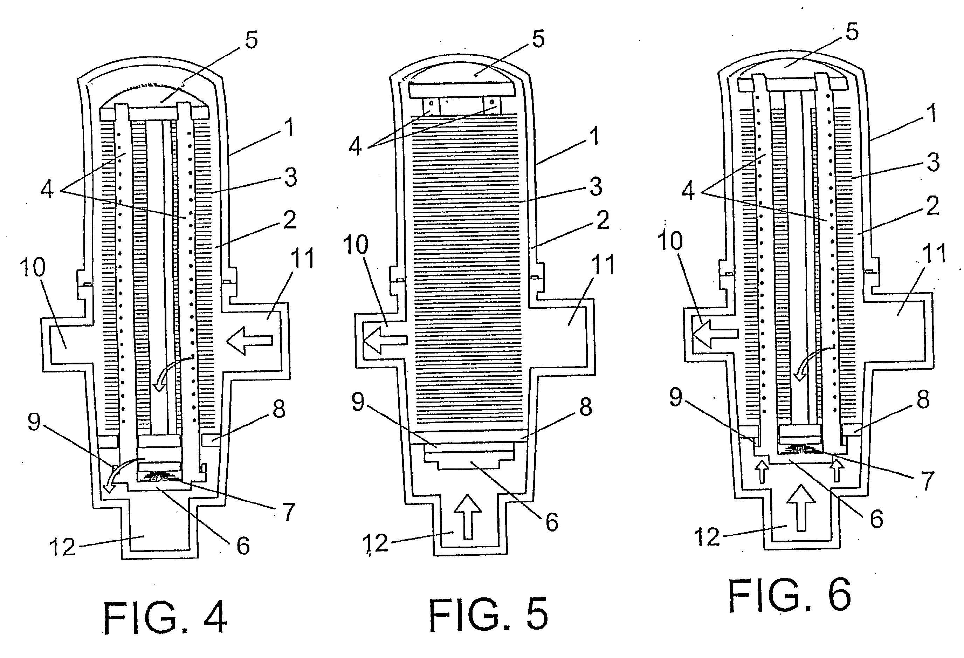

In the self-cleaning state and as shown in Figures 5 and 6, the flow is reversed, accessing through the axial mouth (12) and leaving through third mouth (10) of dirty water, and in this flow reversal is where the mechanisms separating the rings act and carry out the flow reduction, leaving the access only through perforated tubes impinging on the rings, making them in turn rotate by jets under pressure, achieving their cleaning.

The invention incorporates an upper cover (5) located on the assembly of rings (3) configuring the filtering cartridge and a support base (8), as well as a spring (7).

The filter has an additional radial mouth communicated with the outer chamber (2) which will be used as the outlet for water from the cleaning, therefore the flow, upon being reversed, will leave therethrough, allowing a complete independence of the dirty water inlet (11) with the outlet (10) of water from the cleaning, achieving that the filter reaches a greater flow speed in the cleaning at the start, eliminating the larger particles and not separating the rings (3) until the complete closing of the dirty water to be filtered entering the mouth (11), achieving that upon returning again to the filtration state, the cleaning outlet (10) is closed first, achieving that the rings (3) are pressed, and when the latter are in this situation, the inlet (11) of water to be filtered is opened.

The cartridge (3) is formed by four round bases (5), (6), (8) and (9) and four perforated tubes (4), as well as by a spring (7) and an adjusting screw.

The tubes (4) pass the lower base (8) through four perforations, with axial movement freedom, there being a spring (7) located between the lower base (9) and the circular or round base (6) absorbing the pressure between both of tem and keeping them joined, such that said base (9) in collaboration with the spring (7) exerts greater or lower pressure on the rings (3) according to the flow rate in the filtering state and not in the cleaning state, thus adjusting said pressure automatically.

Thus, in a characteristic and innovative manner, it must be emphasized that the assembly formed by the perforated tubes (4), the upper cover (5) and the lower base (6), all of them being integrally joined, moves axially along the cartridge formed by the rings (3), traversing the latter as well as the support base (8) thereof which is joined and fixed to the casing (1) and separates the hollow area (2) in a dirty water chamber above it and a clean water chamber below.

Since the rings (3) are at the upper part of the mentioned assembly moving axially, i.e. on the support base (8) in the dirty water area, these rings are pressed due to the simple fact that the flow passing axially to the clean water chamber will push the base (9) and the latter will in turn push the lower base (6) of the aforementioned assembly, which at its upper part with the cover (5) will push the rings (3) and join them, generating an axial force which will depend on the amount of circulating flow rate, as can be seen in Figure 4.

Upon reversing the direction of the flow, in the cleaning phase, said flow will collide at the lower part again the lower base (6), moving the assembly upwards, separating the rings (3) from one another, until the base (9) collides with the support base (8) fixed to the casing, such that said base (9) blocks the flow path, making the flow pass through the perforated tubes (4) since this is the only possible access route.

Therefore, both in the filtration and in the cleaning state, the model of the invention does not require the spring (7) for the pressing of the rings (3), because as described, said pressure is exerted by the assembly of towers (4), base (6) and cover (5) upon moving axially between them, allowing said system to carry out the change at low pressures.

Finally, said configuration allows configuring, in an advantageous, quick and simple manner, the separation between the rings (3), adding a larger or smaller number of them in the perforated tubes (4), which also allows configuring the filter as a whole with a smaller or greater length without great limitation so as to cover the needs required by the installations, and this benefits the saving with respect to the total number of rings (3) and therefore to the energy consumed.

## Claims

1. A self-cleaning filter for agricultural irrigation water, of the type being cleaned automatically when reversing the direction of the flow and having a cylindrical casing (1) with two coaxial chambers, an outer or perimetral chamber (2), where an inlet conduit (11) for water to be treated and another outlet (10) for self-cleaning are coupled, and another inner or axial chamber, there being an axial conduit (12) in the axial axis of the casing (1) for the outlet of filtered water and the inlet of clean water for self-cleaning, which communicates with the inner chamber, these two coaxial chambers being separated by a grooved disc frame (3), which discs, when pressed on in the axial direction, are responsible for filtering the fluid and when separated, said discs allow expelling the particles retained in their microchannels, also having a lower support base (8) of said rings (3) traversed by the perforated pipes (4) **characterized in that** said pipes (4), together with an upper cover (5) and a lower base (6), form an integral assembly that moves together with free axial movement with respect to the support base (8) because said pipes (4) pass through the support base (8) by means of holes larger in diameter than said pipes (4); and **in that** said support base (8) is fixed to the casing (1) defining two separate chambers, where the base (6) is located in the clean water chamber functioning as a plug because when the flow acts on it with more or less pressure, said lower base (6) exerts an axial force on the pipes (4) and the latter exert an axial force on the cover (5) which transmits said force to the rings (3), pressing them against one another or causing them to separate, according to the direction of the flow, in a filtration or cleaning state.

2. A self-cleaning filter for agricultural irrigation water according to claim 1, **characterized by** the fact that it incorporates a base (9) between the support base (8) of the rings (3) and the lower base (6), traversed by perforated tubes (4), acting as a membrane according to the direction of the flow, acting as a transmitter for the assembly of tubes (4), base (6), and cover (5) detecting the direction of the flow and transmitting the force to be exerted on the rings (3) according to the flow rate.

3. A self-cleaning filter for agricultural irrigation water according to the previous claims, **characterized by** the fact that it incorporates a spring (7) located between the lower base (6) of the tubes (4) and the base (9) acting as a membrane, exerting pressure on the rings (3).

## Patentansprüche

1. Selbstreinigungsfilter für landwirtschaftliches Bewässerungswasser, der Art, welche automatisch gereinigt wird, wenn man die Stromrichtung umkehrt und welche ein zylindrisches Gehäuse (1) mit zwei koaxialen Kammern, einer äußeren oder umlaufenden Kammer (2), in welcher eine Einlassleitung (11) für zu behandelndes Wasser und ein anderer Auslass (10) für eine Selbstreinigung gekoppelt sind, und einer anderen inneren oder axialen Kammer, in welcher sich eine axiale Leitung (12) in der axialen Achse des Gehäuses (1) für den Auslass von gefilterten Wasser und den Einlass von reinem Wasser für eine Selbstreinigung befindet, welche mit der inneren Kammer kommuniziert, aufweist, wobei diese beiden koaxialen Kammern durch einen genuteten Scheibenrahmen (3) getrennt sind, wobei die Scheiben, wenn sie in die axiale Richtung gedrückt werden, für die Filterung des Fluids zustandig sind, und wenn sie getrennt werden, ermöglichen diese Scheiben den Ausstoß der in ihren Mikrokanälen zurückgehaltenen Partikeln, wobei ebenso eine untere Trägerbasis (8) der genannten Ringe (3) von den gebohrten Rohren (4) durchquert ist, **dadurch gekennzeichnet, dass** die genannten Rohre (4), zusammen mit einem oberen Deckel (5) und einer unteren Basis (6), eine integrale Anordnung bilden, welche sich zusammen mit einer freien axialen Bewegung in Bezug auf die Trägerbasis (8) bewegt, weil die genannten Rohre (4) durch die Trägerbasis (8) mittels Löcher durchgehen, die einen größeren Durchmesser als die genannten Rohre (4) aufweisen; und dass die genannte Trägerbasis (8) an dem Gehäuse (1) befestigt ist und zwei getrennte Kammern definiert, wobei die Basis (6) sich in der Kammer mit reinem Wasser befindet und als Stopfen wirkt, da wenn der Strom auf diesen mit mehr oder weniger Druck wirkt, die genannte untere Basis 6) eine axiale Kraft auf die Rohre (4) ausübt und diese eine axiale Kraft auf den Deckel (5) ausüben, welcher die genannte Kraft auf die Ringe (3) überträgt, und diese gegeneinander drückt oder ihre Trennung bewirkt, gemäß der Stromrichtung, in einem Filtrierungs- oder Reinigungszustand.

2. Selbstreinigungsfilter für landwirtschaftliches Bewässerungswasser nach Anspruch 1, **dadurch gekennzeichnet, dass** er eine Basis (9) zwischen der Trägerbasis (8) der Ringe (3) und der unteren Basis (6), welche von gebohrten Rohren (4) durchquert ist, eingliedert, und als Membran gemäß der Stromrichtung wirkt, unter Wirkung als Übertragungselement für die Anordnung von Rohren (4), Basis (6) und Deckel (5), wobei die Stromrichtung erfasst und die auf die Ringe (3) gemäß dem Durchsatz auszuübende Kraft übertragen wird.

3. Selbstreinigungsfilter für landwirtschaftliches Bewässerungswasser nach den vorhergehenden Ansprüche, **dadurch gekennzeichnet, dass** er eine Feder (7) eingliedert, welche sich zwischen der unteren Basis (6) der Rohre (4) und der Basis (9), welche als Membran wirkt, befindet, wobei ein Druck auf die Ringe (3) ausgeübt wird.

## Revendications

1. Filtre autonettoyant pour au d'irrigation agricole, du type étant nettoyé automatiquement lorsque l'on inverse la direction d'écoulement et ayant une carcasse cylindrique (1) avec deux x chambres coaxiales, une chambre extérieure ou périmétrale (2), où sont couplées une conduite d'entrée (11) pour l'eau à traiter et une autre de sortie (10) pour auto-nettoyage, et une autre chambre intérieure ou axiale, en ayant une conduite axiale (12) dans l'axe axial de la carcasse (1) pour la sortie de l'eau filtrée et l'entrée de l'eau propre pour auto-nettoyage, qui communique avec la chambre intérieure, ces deux chambres coaxiales étant séparées par un cadre de disques rainurés (3), dont les disques, lorsqu'ils sont pressés dans la direction axiale, sont responsable du filtrage du fluide et lorsqu'ils sont séparés, lesdits disques permettent d'expulser les particules retenues dans leurs microcanaux, en ayant également une base de support inférieure (8) desdites bagues (3) traversée par les tubes perforés (4) **caractérisé en ce que** lesdits tubes (4), conjointement avec un couvercle supérieure (5) et une base inférieure (6), forment un ensemble monobloc qui se déplace conjointement avec un mouvement axial libre par rapport à la base de support (8) du fait que lesdits tubes (4) passent à travers la base support (8) par le biais de trous à diamètre plus grand que lesdits tubes (4) : et **en ce que** ladite base de support (8) est fixée à la carcasse (1) définissant deux chambre séparées, où la base (6) est située dans la chambre d'eau propre fonctionnant comme un bouchon du fait que lorsque l'écoulement agit sur celle-ci avec plus ou moins de pression, ladite base inférieure (6) exerce une force axiale sur les tubes (4) et ces derniers exercent une force axiale sur le couvercle (5) qui transmet ladite force aux bagues (3), en les pressant les unes contre les autres ou en les amenant à se séparer, selon la direction de l'écoulement, dans un état de filtrage ou de nettoyage.

2. Filtre autonettoyant pour eau d'irrigation agricole selon la revendication 1, **caractérisé en ce qu'**il incorpore une base (9) entre la base de support (8) des bagues (3) et la base inférieure (6), traversée par les tubes perforés (4), agissant comme une membrane selon la direction de l'écoulement, en agissant comme un transmetteur pour l'ensemble de tubes (4), base (6), et couvercle (5) en détectant la direction de l'écoulement et en transmettant la force à exercer sur les bagues (3) selon le débit.

3. Filtre autonettoyant pour eau d'irrigation agricole selon les revendications précédentes, **caractérisé en ce qu'**il incorpore un ressort (7) situé entre la base inférieure (6) des tubes (4) et la base (9) agissant comme une membrane, en exerçant de la pression sur les bagues (3).
